# EUROPEAN PATENT APPLICATION

(11) **EP 3 664 000 A1**
(43) Date of publication of application: **10.06.2020**
(21) Application number: 18210181.6
(22) Date of filing: 04.12.2018
(51) Int. Cl.: G06Q 10/08, G06Q 30/00, G06Q 50/28

(54) **COLD CHAIN MANAGEMENT**

(71) Applicant: L'Air Liquide Société Anonyme pour l'Etude et l'Exploitation des Procédés Georges Claude, 75007 Paris (FR); Air Liquide Deutschland GmbH, 40235 Düsseldorf (DE)
(72) Inventor: LIEBERT, Holger, 47447 Moers (DE); BROUNS, Marcel, 47906 Kempen (DE); Dohrmann, Stefan, 45257 Essen (DE)
(74) Representative: Keenway Patentanwälte Neumann Heine Taruttis

(57) **Abstract**

A method and a corresponding system for determining the type and amount of coolant for a container for cooling contained goods is described, wherein the determination is based at least on one of characteristics of a cooling period, characteristics of the goods and a temperature profile of container reflecting temperature correlations stored in the database.

## Description

The present invention relates to a system and a respective method for an optimized cold chain management based on IoT technology and a database storing reference parameters, particularly for providing a quantity of coolant customized for a container holding the goods.

Transporting goods from a distribution center, i.e. a logistical center, to a customer premises has become popular not only for companies receiving large amounts of goods, i.e. where an entire load of a van is delivered to one customer. In the recent past it has become very popular to buy any kind of goods via the internet. More and more online-shops are developing new business models for providing corresponding services, that is selling and delivering food and other items that need to be cooled until delivery to the final customer.

For transporting so-called non-food products, e.g. books or any non-perishable stuff, an adequate packaging can be chosen to protect the goods. However, perishable foods require a specific temperature when in transport.

In view of the growing e-commerce for perishable food products, it is an essential requirement to keep the goods cool until delivery to the final customer. For example, the cold chain for transporting fresh fish or other perishable goods, i.e. foods or chemicals, may not be interrupted. For perishable foods, there are already legal rules and regulations regarding the design and implementation of cold chains, that have to be followed by a shop and a forwarding agent when delivering perishable goods.

Accordingly, there is a huge number of shipments comprising food and non-food goods that have to be delivered to customers. The shipments to be delivered from a warehouse to the customers will be comparatively small since most of the end customers order small amounts of goods, wherein the goods may comprise perishable food or non-food products. Thus, there is a need to optimize a cold chain for delivering perishable goods to customers, wherein the amount of coolant is customized for the transportation of the goods from a warehouse to the end customer.

In view of the huge number of shipments, each being comparatively small and individually packed in packages having different characteristics, an optimized system for providing optimum amount of coolant is required, since the vehicles used for transportation typically do not comprise a cool chamber for cooling the entire package of an order.

In prior art systems an abundant amount of coolant is provided for a single shipment in order to ensure that the perishable goods to be transported remain cool until delivered to the end customer even if the duration of the transport to the end customer takes longer than expected. In addition, the isolation properties of the wrapper remain disregarded because the properties of a particular packing are unknown. In addition, ecological and sustainability requirements must complied with.

This problem of providing an adequate amount of coolant for a particular shipment being packed in a standard container is solved by the method and system as claimed in the independent claims. Preferred embodiments of the invention are claimed in dependent claims.

It is noted in the individual features specified in the claims may be combined with one another in any desired technological reasonable manner and may form further embodiments of the invention. The specification, in particular taken together with the figures, illustrates the invention further and specifies particularly preferred embodiments thereof.

In the following the invention is described with reference to the accompanying figures, wherein
Fig. 1 illustrates an exemplary course of events when an end customer purchases perishable goods online for determining and providing an amount of coolant;
Fig. 2 depicts temperatures of a container and an item stored therein comprising a defined amount and type of coolant.

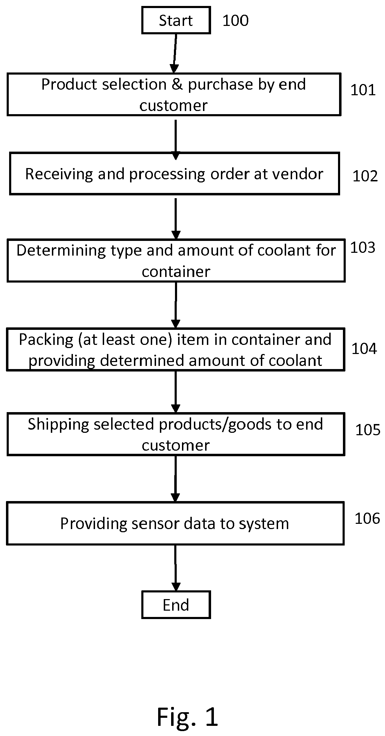

Figure 1 depicts an exemplary course of events taking place when an end customer places an order of perishable goods, confer 101. The order can be placed either online or by using any adequate communication medium allowing to place an order. In this exemplary embodiment it is assumed that the customer places an order comprising at least one item that has to be cooled until consumption. Accordingly, said at least one item has to be stored and transported using the so-called cold chain, i.e. the item must be kept below a predefined temperature at all times until final delivery to the customer. In one embodiment the customer may use an online food delivery service or a so-called e-commerce business offering for example fresh vegetables, that shall be cooled until delivery to the customer.

The order is received at the system of the vendor, where it is processed, confer 102. It is noted that the electronic processing of the order, i.e. electronic reception of the order data and related data processing may take place on any suitable processing system, i.e. any suitable digital signal processor equipped with suitable software for receiving and processing an order.

The processing at the vendor comprises the steps as known from prior art systems, particularly as known from online shops, where a customer may place his order via the Internet. These steps as known from prior art systems may comprise a check whether the ordered goods are available, whether the ordered goods can be delivered to the customer based on the available transport facilities, and whether the ordered goods or at least one of them must be cooled and so on. In the embodiment described herein it is assumed that at least one of the ordered goods must be cooled permanently in order to ensure that a temperature of the ordered item is kept below a predefined temperature or within a predefined temperature range.

It is to be noted that the handling, processing and transportation of food items shall comply with the Hazard Analysis and Critical Control Points (HACCP) standard, which is the international concept to identify and avoid risks in food production and processing. The HACCP concept is characterized by a structured approach for providing safety in consumer goods. Various countries including the USA and Europe have agreed on this concept. Risk management is a fundamental component of risk analysis. Companies that produce or handle consumer products, i.e. particularly food, strive to comply with the rules of the HACCP standard. Accordingly, the method and system described in here is designed to comply with the HACCP standard. Basically, the regulations relate to the requirement, that the core temperature for food may not exceed a predefined limit or shall be kept within a predefined temperature range.

However, it is factually impossible to directly measure the core temperature of for example food that is ordered by an end customer and hence must be delivered. However, according to experience, the core temperature of an item will be that of the respective environment or very close to the ambient temperature, if the item has been stored long enough within that environment. Hence, even if the core temperature of an item cannot be measured directly without damaging the product, it's core temperature can be determined with acceptable reliability, if the temperature of the environment (assumed to be constant) and the initial core temperature and the duration of the item's storage within that environment are known. In this way the core temperature of a perishable good, for example food, can be determined empirically.

Vice versa, when transporting an item where it's the core temperature shall not exceed a predefined limit, e.g. a perishable food that must be cooled, the core temperature of that item will rise if transported in an uncooled environment, i.e. where the temperature of the environment will heat up the item.

In view of the above-mentioned problems, there is a need for providing an optimised method to deliver the ordered goods while at the same time complying with the HACCP requirements. In particular there is a need for providing an optimized quantity and type of coolant for transporting the goods as ordered by a customer in a suitable container.

The processing of an order placed by a customer comprises the generation of information necessary for managing the order. The information may comprise a unique order number and at least the commissioning of the ordered goods and the planning of the route for transporting the ordered goods to the destination address, which can be done by an Enterprise Resource planning (ERP) software.

In addition, and with regard to the requirement of cooling the at least one item a number of additional aspects have to be considered, in order to provide a customized amount of coolant for a suitable or appropriate container, which is going to be used for transportation of the at least one item to the end customer.

Typically, when a comparatively small amount of a perishable item is ordered, the item is not packed in a container comprising an active cooling unit coupled to an (electrical) energy supply. Instead, the item is packed in a container having at least a thermal insulation. Though the purpose of the thermal insulation is to keep the packed item at the temperature when placed in the container, the item placed in the insulated container will get warmer in case the environment temperature around the container is higher than that of the item. To prevent the item placed in the container from getting warm too fast, a coolant is placed near the item to keep the item cool.

The amount, type and temperature of coolant provided for one (passive) container has to be determined under consideration of a plurality of aspects, confer 103. For example, the following parameters can be considered when determining the amount of coolant required for complying with the required cooling of the item, i.e.
- the estimated duration of the storage of the item in the container,
- the thermal insulation properties of the container,
- the outside temperature of the container while the item is stored in the container as well as
- the type of coolant and
- the temperature of the coolant.

Furthermore, the initial temperature of an item, particularly the core temperature as far as relevant for the HACCP quality control, shall be taken into account as parameter for calculating the amount, type and temperature of the coolant for transporting the kind of item. In case the initial core temperature cannot be measured exactly, it can be estimated empirically with sufficient reliability based on the conditions of its preceding storing as described above. Correspondingly, the database provides reference data for different types of items and different initial core temperatures that can be taken into account when calculating the amount, type and temperature of a coolant.

In addition, one may consider if there is a plurality of items stored in the one container, wherein the items shall be delivered to different end customers. In that case the container will opened for delivering an item to a customer, while the container is on the way to the end customer of the last delivered item.

In addition, an excess charge of coolant may be added to the container in order comply with safety regulations, i.e. to maintain the container cool in case the actual delivery takes longer than the estimated or calculated time, which may happen in case of traffic jams or waiting time before shipment. Accordingly, the calculation of the amount of provided excess charge of coolant can be based on a plurality of considerations and particularly on empirical values gathered in the past.

The time needed for transportation of the container from the warehouse, i.e. the place of placing the item and coolant in the container, to the location of the end customer can be calculated using a routing tool that identifies an optimized route for delivering containers to a plurality of end customers as known from prior art, wherein said optimized routing tool will take into account that a plurality of containers have to be transported to different customers, i.e. different locations. The routing tool will calculate a route for delivering under consideration of various criteria like geographic distance and delays caused by traffic jams.

In one embodiment such delays in transportation can be identified for example by consulting an online traffic monitoring system. It is known that many countries have employed a system for traffic supervision to predict traffic jams and to provide guidance to drivers regarding traffic jams for example by radio broadcasting. Similarly, other online services, e.g. GOOGLE, collect data regarding the current and expected volume of traffic. These data sources can be accessed for example for online route planning tools. Consequently, the estimated time needed for transporting the container from the warehouse to the end customer can be calculated based on real-time traffic data that may be available by an online system.

However, since such traffic supervision systems are based on online data, these systems are unable to predict if there will be a traffic jam in the future causing an additional delay at the time of actual transportation of the container. In many cases traffic jams can be predicted based on statistics and based on other data. For example, a traffic jam will occur regularly during rush hour on weekdays and according to experience will increase in case of certain weather conditions, for example heavy rain or even snow. However, said traffic jam will be less severe during the holiday season. Since these conditions are predictable, they can be taken into account when estimating/calculating delays in transportation. Accordingly, traffic information based on empirical data and experience can be considered as well.

However, with further regard to the step of determining the amount and type of needed coolant, there are more parameters that have to be considered for keeping the temperature of the perishable foods within an allowed interval. Considering the plurality of different available containers, goods and conditions regarding the transport to the end customer, a huge number of combinations may occur.

In order to determine the best type of coolant and the optimum amount and temperature thereof for one container under consideration of the various parameters that may have impact on the temperature of the goods, an optimization algorithm consults a database, wherein the database stores reference data regarding the different types of goods, containers and temperatures for the different requirements. That is, instead of roughly estimating a sufficiently large amount of coolant, the best matching type of coolant and an optimized amount thereof are determined under consideration of reference data. In this way the type and amount of coolant can be determined in an optimized way. In particular, a sufficiently large amount of coolant is calculated while at the same time preventing an excess thereof.

The type, amount and temperature of the coolant depends on the type of the ordered goods. Some types of goods have to be stored in a frozen state, i.e. these goods have to be delivered in a frozen state. Please note that for different foods the HACCP rules define different temperatures that have to be complied with during the entire transport. For example, frozen meat may not unfreeze while being transported, while vegetables have to be kept cool but above 0°C. Accordingly, the database stores which food must be transported at what temperature. Please note, that the HACCP rules relate to inner, i.e. core temperatures.

In addition, the initial (core) temperature of an item can be stored as parameter in the database for determining the amount, type and temperature of a coolant. While it is obvious that in many cases the initial (core) temperature of an item cannot be measured exactly, the (core) temperature can be estimated with sufficient reliability based on the outside temperature and/or the conditions of the previous storing of the item. In this way values of (core) temperatures of different types of goods or items can be determined that are stored in the database and that serve as reference parameters for determining the amount, type and temperature of the coolant. In this way reference values of different items or goods can be stored in the database thus providing reference values for different types of goods or items when determining the amount, type and temperature of coolant.

These parameters regarding the types and temperatures of goods to be transported and their respective required temperature are stored in the database as a basis for the temperature to maintain for delivery to the end customer.

Note that the database may not only store a required temperature according to the HACCP regulations. In addition, the database may store thermal properties of the goods, e.g. specific thermal capacity of goods for different kinds and types of goods. In case the initial temperature of an asset is below the required temperature, i.e. the asset may get warmer, then the amount of coolant can be reduced respectively to keep the asset at an admissible temperature being higher than the initial temperature.

At the warehouse, where the ordered goods are stored until shipment to an end customer, an appropriate container/packaging must be chosen. The selection of an appropriate container may depend also on various requirements and conditions. For example, the HACCP regulations, which shall be complied with, may specify special containers for some goods. In addition, the size of the container typically is defined by the size of the goods. Furthermore, the type of container may depend on environmental conditions, i.e. outside temperature. Accordingly, there is a plurality of containers having different thermal properties, i.e. a different thermal capacity and a different thermal transfer coefficient.

The thermal properties of a container can be identified using conventional means and methods. The respective thermal properties of each container or type of container as well as other relevant parameters of the respective container are stored in the database. The method for determining the type and amount of coolant takes the thermal properties of a particular container into account in addition to other criteria. Note that also other properties of the container or type of container, for example the costs and the size of the container, can be taken into account for selecting an appropriate container. Note that corresponding parameters of containers are also stored in the database as profiles and are taken into account when determining the amount, type and temperature of the coolant.

In addition, further parameters and conditions related to the transport of the goods to the end customer can be taken into account. In one embodiment impact of the temperature at the cargo area, i.e. where the container will be located during shipment to the end customer, to the container and the thermal properties of the container will be identified and stored in the database. Said identification of the impact on the thermal properties of the container can be accomplished using known techniques.

Similarly, the properties of the transport van having impact on the thermal situation of the container/goods in the container can be identified and stored in the database. In one embodiment, the thermal isolation properties of the cargo area of a particular van can be identified and stored in the database. Obviously, a cooled container placed in bright sunlight will require more coolant than the same container placed (and transported) in a closed compartment surrounded by solid walls, which is or will become a comparatively cool place.

Furthermore, the thermal impact of a plurality of cooled containers can be considered. If a plurality of cooled containers is placed close to each other, then there will be a mutual cooling effect between the containers. Hence, the impact of at least one cool or cooled container placed in the vicinity of another cooled container can be identified and stored in the database and may serve as an additional basis for calculating the amount, type and temperature of the coolant, wherein this mutual cooling effect can be identified or measured using conventional steps.

The properties of different types of coolant or different conditions of a coolant can be stored in the database. For example, so called dry ice, also called cardice, is the solid form of carbon dioxide, which can be used as coolant/cooling agent. However, dry ice can be used in different conditions, i.e. in the form of snow or in small blocks having a volume of a few mm³ to some cm³, called pellets or nuggets, or bigger blocks of volumes up to some liters. These different types or forms of coolant are used for different purposes due to their different properties. For example, snow of dry ice is typically used for quickly providing a huge amount of cooling energy, i.e. if goods are close to their temperature limit and therefore have to be cooled down quickly. In contrast thereto, more solid pellets or blocks of dry ice provide less cooling energy at a time but over a longer period, thus blocks of dry ice are used for providing cooling energy over a longer period of time, caused by the ratio of surface area to volume. The properties of the different types or forms of coolant are stored in the database.

The method for determining the most suitable type or form and amount of coolant necessary for sufficient cooling of the perishable goods, confer step 103, at least takes the above mentioned properties of the ordered goods or items, the identified conditions regarding temperatures and traffic conditions and the temperature profile of a containers into account.

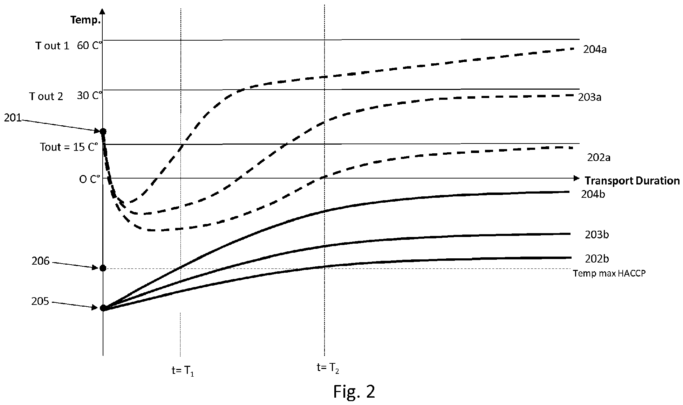

Fig. 2 schematically illustrates empirically determined temperature profiles illustrating correlations of temperatures versus time, i.e. transport duration under different conditions, i.e. in view of different temperatures outside a particular container. Please note that all illustrated temperatures are not drawn to scale.

The temperature profiles have been determined empirically for a particular transport container in different ambient/outside air temperatures, namely 15°C, 30°C and 60°C, wherein it is assumed that there is no relevant air circulation around the container, which would expedite any temperature change.

The three pairs of temperature profiles, 202a/202b and 203a/203b and 204a/204b, illustrate the temperatures inside the container, i.e. 202a-204a, and the core temperatures 202b inside the item stored in container in the respective ambient temperature, i.e. at 15°C and 30°C and at 60°C respectively.

It is assumed that the item is placed in the container at time t = 0, wherein the initial temperature in the container is around 20°C, confer 201. Furthermore, at time t=0, the coolant is placed in the container, which is 1.6kg of dry ice in the form of pellets in each case. Lastly, the item to be transported in the container is put into the container, wherein the initial core temperature, confer 205 in Fig.2, of the item at t=0 in each case is below the allowed maximum temperature, confer 206 in Fig. 2.

In each case the initial container temperature initially drops from the initial temperature, confer 201 in Fig. 2, which is caused by the added coolant, and then rises due to the outside temperature until the temperature assimilates to the respective outside temperature. Accordingly, container temperature 202a slowly rises until reaching 15°C, container temperature 203a rises until assimilating to the respective outside temperature of 30°C and container temperature 204a rapidly rises until assimilating the respective outside temperature of 60°C. Furthermore, it is noticed that the temperature drop of 204a is less than the respective temperature drops of 203a or 202a due to the high outside temperature.

Since the container temperature, more exactly the temperature inside the container, in each case is higher than the respective initial temperature 202b-204b of the item stored in the container, the temperature of the item rises immediately, wherein the speed of the temperature climb depends on the container temperature.

Considering now that the temperature of the item stored in the container shall be kept below an allowed threshold value, in particular below an HACCP conform temperature limit 206, one can determine the allowed transport duration, i.e. the time span until the temperature of the item reaches the temperature limit. As illustrated by temperature 204b, the temperature of the item rises fast until reaching the maximum allowed threshold temperature 206 after a time span of t=T1. Temperature 204b indicates the temperature rise of the item according to a container temperature of 202a, and which reaches the maximum allowed temperature at t=T2. Not surprisingly the maximum allowed transport duration is significantly short in case the temperature outside the box is high, whereas it is longer for less high outside temperatures as illustrated by 202a and 202b.

The correlation of temperatures as depicted in Fig. 2 has been determined empirically for a huge number of different containers in different temperature conditions using different quantities of coolant and different types of coolant (blocks or pellets of dry ice or snow of dry ice). The determined data have been stored in an electronic database as temperature profiles for a particular container and under different temperature conditions. The data is accessible for example by a digital processing system executing instructions for determining the appropriate type and quantity of coolant to be provided for a particular container under consideration of individual conditions.

The process of selecting a type and a quantity of coolant to be provided to the container when transporting the ordered goods can be based on stored temperature profiles of a container.

Referring again to Fig. 1, the method for determining coolant, confer step 103 in Fig. 1, can be implemented in software carrying out a set of predefined rules for identifying the appropriate type of coolant and for calculating a respective amount of cooling based on classic Boolean logic or a mathematical algorithm.

In one alternative embodiment the algorithm for determining the best matching type and required amount of coolant can be implemented in software and based on fuzzy logic or an artificial neural network or an adaptive neuro fuzzy interference system. It is noted that fuzzy logic systems per se are known to the skilled artisan. In fuzzy logic systems, typically implemented in software, the algorithm uses a plurality of weight values to reflect the importance of above specified conditions and properties. For example, conditions and properties having impact on the cooling of the goods may be associated with bigger weight values than conditions and properties related to the costs of the shipment of the goods, since the most important criterion is successful delivery of the shipment, i.e. undamaged and within the scheduled time and temperature interval. However, the criteria for selecting the most appropriate type of coolant and calculating and sufficient amount of coolant may be optimized in view of costs by selecting appropriate weight values for the parameters and conditions.

Once the type and amount of coolant is determined, said amount of coolant of the selected type and the at least one item is provided to the container, confer 104 of fig. 1, so the container is ready for shipment to the at least one end customer.

Optionally, in one preferred embodiment, the transport facility, e.g. the van, or a container is equipped with at least one sensor to track the conditions during the shipment to the end customer. The information produced by the at least one sensor is provided to the database for refining stored values, conditions and the algorithm deployed for selecting the type of coolant in determining the respective amount. That provision of information produced by the at least one sensor can be off-line or online.

For providing the sensed information, the sensor may record the information. The recorded information may then be provided to the database upon return of the container/sensor to the warehouse or to any other facility enabling the transfer of the data to the database. In this way the recorded data can be used for refining the data model stored in the database and the algorithm for selecting the type and determining a respective amount of coolant.

Alternatively, a sensor provided to the container may be coupled to any device or means enabling online data transmission of the sensed information/, i.e. temperature etc., to the warehouse or respective facility. The information may be used for instantly refining and improving the data model and the algorithm. In addition, that information can be used to monitor the actual conditions of the perishable goods during shipment to the end customer.

In that case a monitoring tool can be used to keep track of the conditions during shipment. In case the shipment conditions do not comply with the requirements for delivery, e.g. the HACCP rules, the monitoring tool may raise a notification/alarm indicating that the set of rules has not been complied with during shipment to the end customer. Accordingly, the end customer may be notified by the system respectively.

In one embodiment, the sensor may be a temperature sensor, which can be placed inside or outside of the container. Similarly, a sensor for detecting light (sunlight) can be attached to the outside of the container. The sensors are adapted and configured to sense parameters, i.e. temperatures and exposure to sunlight, and to provide the measured data to the database and, optionally, to an online surveying system.

The container may then be shipped to the end customer, step 105, wherein the above made assumptions shall be complied with, i.e. using the selected route and transport facility (van), starting at the scheduled time etc.

Optionally and in case at least one sensor produces information, which can be provided to the database, step 106, thus refining the data in the database. Note that in one embodiment this can be off-line, i.e. at the end of the shipment cycle, or online, i.e. while the container is on the way to the end customer, using any IoT technology to provide the sensed data online, i.e. real time. In case of transmitting the information online, the provision of sensed data to the database, step 106, is performed simultaneously to step 105, that is during the shipment of the container. Future determinations of an amount, type and temperature of a coolant thus can be based on the refined database, i.e. the database is learning based on experience of delivering ordered goods and items to end customers.

The method can be implemented on a system comprising a digital signal processor for executing software code implementing above mentioned algorithm, when the code is loaded into the processor, and a storage for storing the database. In one embodiment the system can be implemented using a conventional person computer, i.e. a PC. In an alternative embodiment, the system can be implemented on application specific hardware.

In one embodiment of the invention, the method and corresponding system can be integrated into a system comprising or being operatively coupled to a coolant supply device that outputs the determined amount, type and quantity of coolant for at least one container. The calculated amount, type and temperature of the coolant can be provided as input data to the coolant supply device, which in turn outputs coolant as specified. In this way a device for supplying coolant can be controlled to provide an optimum amount, type and temperature of coolant which is tailored for specific item and transport situation, while at the same time complying with HACCP requirements.

### List of reference numerals

- 100: Start of method
- 101: Product selection and related purchase by end customer
- 102: Receiving and processing order vendor
- 103: Determining amount, type and temperature of coolant for container
- 104: Packing (at least one) item in container and providing determined amount of coolant
- 105: Shipment of products
- 106: Providing sensed data to database
- 201: Initial inner temperature of container
- 202a: Temperature in container
- 202b: Temperature of item in container
- 203a: Temperature in container
- 203b: Temperature of item in container
- 204a: Temperature in container
- 204b: Temperature of item in container
- 205a: Initial temperature of item stored in container
- 206: Max allowed temperature

## Claims

1. Method for providing a quantity of coolant for a container for cooling contained goods, comprising the steps of
- identifying characteristics of a cooling period of the goods in the container; and
- identifying characteristics of the goods pertaining to cooling of the goods; and
- determining a type and quantity and temperature of the coolant based on the identified characteristics of the cooling period and
the identified characteristics of the goods, and
further based at least on a temperature profile of a container reflecting a correlation of temperatures stored in a database.

2. The method of claim 1 further comprising the step of receiving information pertaining to the temperature within the container when the container is shipped and storing said information in a temperature profile of the container.

3. The method of claim 1 further comprising at least one of identifying reference characteristics of a specific coolant and storing said characteristics in the database; and
identifying a temperature profile of a container reflecting temperature correlations and storing said temperature profile in the database; and
identifying reference characteristics of specific goods intended to be transported in the container; and storing said characteristics in the database.

4. The method of claim any preceding claim, wherein the step of identifying characteristics of the goods pertaining to cooling the goods comprises identifying the type of the respective goods and the mass of respective goods.

5. The method of any preceding claim, further comprising the step of determining the type of coolant based on at least one of the identified characteristics of the goods and the cooling period and characteristics of the container.

6. A system for providing a quantity of coolant for a container for cooling contained goods, the system comprising a digital signal processor and storage for storing executable software code and for storing a database, wherein the software code and the system is configured to implementing the steps of
- determining a quantity of the coolant based on
- characteristics of a cooling period and characteristics of the goods, and
- further based at least on data of the coolant stored in a database and
- a temperature profile of a container reflecting a correlation of temperatures stored in the database.

7. The system of claim 6 wherein the system is further configured to receive information pertaining to the temperature within the container when the container is shipped.

8. The system of claim 6 or 7 wherein the system is furthermore configured to identifying reference characteristics of a coolant and storing said characteristics in the database; and
identifying a temperature profile of a container reflecting temperature correlations and storing said temperature profile in the database; and
identifying reference characteristics of specific goods intended to be transported in the container; and storing said characteristics in the database.

9. The system of any preceding claim 6 to 8 wherein the system is further configured to identify characteristics of the goods pertaining to cooling the goods comprising identifying the type of the respective goods and the mass of respective goods.

10. The system of any preceding claim 6 to 9 wherein the system is further configured to determine the type of coolant based on at least one of the identified characteristics of the goods and the cooling period and characteristics of the container.
